(19) **Europäisches Patentamt**

**European Patent Office**

**Office européen des brevets**

(11) **EP 0 996 298 B1**

(12) **FASCICULE DE BREVET EUROPEEN**

(45) Date de publication et mention
de la délivrance du brevet:
**08.03.2006 Bulletin 2006/10**

(51) Int Cl.:
*H04Q 3/66* *(2006.01)*    *H04L 12/56* *(2006.01)*

(21) Numéro de dépôt: **99402386.9**

(22) Date de dépôt: **30.09.1999**

(54) **Routage des appels selon des bandes passantes**

Leitweglenkung von Anrufen nach Bandbreite

Call routing according to bandwidth

(84) Etats contractants désignés:
**AT BE CH CY DE DK ES FI FR GB GR IE IT LI LU MC NL PT SE**

(30) Priorité: **15.10.1998 FR 9812931**

(43) Date de publication de la demande:
**26.04.2000 Bulletin 2000/17**

(73) Titulaire: **ALCATEL**
**75008 Paris (FR)**

(72) Inventeurs:
• **Tran, Nhut Quan**
**95800 Cergy (FR)**
• **Phan, Cao Thanh**
**92500 Rueil Malmaison (FR)**

(74) Mandataire: **Sciaux, Edmond et al**
**COMPAGNIE FINANCIERE ALCATEL**
**Département Propriété Industrielle**
**54, rue La Boétie**
**75008 Paris (FR)**

(56) Documents cités:
**EP-A- 0 276 754**    **EP-A- 0 830 047**
**WO-A-95/18498**

• **WANG Z ET AL: "BANDWIDTH-DELAY BASED ROUTING ALGORITHMS" IEEE PROCEEDINGS OF THE GLOBAL TELECOMMUNICATIONS CONFERENCE, 14-16 NOVEMBER 1995, vol. 3, pages 2129-2133, XP000633662**
• **BAGCHI A: "Route Selection with multiple metrics" INFORMATION PROCESSING LETTERS, vol. 64, no. 4, pages 203-205, XP002110723 November 1997, Elsevier, the Netherlands**
• **TEDIJANTO T E ET AL: "NBBS PATH SELECTION FRAMEWORK" IBM SYSTEMS JOURNAL, vol. 34 (1995), no. 4, pages 629-639, XP000542403 ISSN: 0018-8670**

**Description**

La présente invention concerne les réseaux de télécommunications, et plus particulièrement le routage des appels dans un réseau de télécommunications, notamment dans un réseau privé, dans lequel les appels présentent différentes bandes passantes.

Les réseaux privés de télécommunications sont formés de noeuds de communication, reliés entre eux par des arcs ou artères acheminant les communications et/ou la signalisation. J. Eldin et K. P. Lathia, Le RNIS appliqué au Centrex et aux réseaux privés virtuels contient une description des réseaux privés physiques et des réseaux privés virtuels. Comme expliqué dans ce document, dans un réseau privé physique, les différents sites ou noeuds sont reliés par des circuits spécialisés, tandis que dans un réseau privé virtuel, chaque noeud est relié au commutateur local le plus proche du réseau public, où un logiciel approprié établit les liaisons à la demande. Deux variantes de réseau privé virtuel existent: on peut d'une part prévoir des liaisons semi-permanentes, qui sont établies sans numérotation, dès que l'un des noeuds a besoin du circuit, et qui relient toujours les deux mêmes points. Ce peut être notamment le cas pour des liaisons de signalisation, dans une application sur un réseau numérique à intégration de service. On peut d'autre part prévoir des liaisons commutées, qui ne peuvent être établies que par numérotation. Dans la suite de la description, on considère des réseaux privés physiques ou virtuels, formés de noeuds reliés par des artères, qui peuvent être de tout type: des artères comprenant des liaisons dédiées, ou des artères formées en empruntant le un réseau externe; celui-ci peut être de type quelconque - le réseau public commuté, un réseau public mobile terrestre, un réseau numérique à intégration de service, un autre réseau privé, etc.

Dans les réseaux de télécommunications se pose le problème du routage des communications, i. e. du choix d'un acheminement des artères permettant d'acheminer une communication à travers le réseau, le cas échéant avec des débordements vers un réseau externe. Un tel routage des communications a pour but de permettre l'acheminement d'une communication, tout en cherchant à répartir la charge des communications à travers le réseau. De façon connue en soi, on procède à des calculs de routage en définissant une fonction de coût pour les artères du réseau. Cette fonction permet d'affecter à chaque artère un coût représentatif du risque de blocage de l'artère; on peut choisir une fonction de coût calculée comme le rapport entre les ressources requises et les ressources disponibles sur l'artère:

$$\text{coût} := \text{ressources requises} / \text{ressources disponibles.}$$

Le meilleur routage est dans ce cas celui qui minimise la somme des coûts des artères composant le routage. On procède habituellement à un calcul de routage au moment de l'établissement d'une communication, de sorte à acheminer la communication.

La publication "BANDWIDTH-DELAY BASED ROUTING ALGORITHMS', Wang Z et al, IEEE PROCEEDINGS OF THE GLOBAL TELECOMMUNICATIONS CONFERENCE, 14-16 novembre 1995, vol. 3, pages 2129-2133, divulgue un autre procédé de routage.

Un problème nouveau auquel l'invention apporte une solution est celui de la fréquence des calculs de routage. En effet, dans la solution de l'art antérieur décrite plus haut, le coût d'un routage sur une artère donnée dépend des ressources requises, et varie donc d'une communication à l'autre. Il est de ce fait nécessaire de répéter un calcul de routage pour chaque nouvelle communication, même si l'on a effectué auparavant un routage entre les mêmes noeuds d'origine et de destination. Ce problème n'apparaît pas dans l'art antérieur, où le routage est considéré comme naturel.

Par ailleurs, dans les réseaux privés se pose le problème de la gestion des bandes passantes. En effet, dans la mesure où les réseaux acheminent des types de communications différents - voix, données, ou autres -, différents protocoles proposent, comme une qualité de service, des communications présentant des bandes passantes différentes. C'est par exemple le cas des protocoles X25, Frame relay ou circuit Nx64 Kb/s. Certains de ces protocoles, comme par exemple les protocoles X25 ou Frame Relay autorisent un repli sur des bandes passantes inférieures si la bande passante n'est pas disponible.

Un autre problème nouveau auquel l'invention apporte une solution est celui de la gestion des bandes passantes dans le routage des communications. Les solutions de l'art antérieur n'apportent aucune garantie sur la bande passante dans l'établissement d'une communication, et proposent ou mieux un repli sur une bande passante plus étroite.

L'invention propose un procédé de routage d'une communication, qui permet une gestion efficace des bandes passantes, en permettant de garantir une qualité de service. La solution de l'invention permet aussi de limiter le nombre et la fréquence des calculs de routage.

Pour cela, l'invention propose un procédé de routage d'une communication dans un réseau avec une pluralité de noeuds reliés par des artères, comprenant le calcul du coût de différentes routes pour acheminer la communication, et le choix d'une route en fonction du coût, dons lequel le coût d'une route est fonction :

- de la bande passante disponible sur les artères constituant la route ;
- des ressources disponibles sur les dites artères ;
- de la somme des coûts des artères constituant la route,
- et de la bande passante requise pour cette communication;

le coût d'une artère étant un vecteur présentant: une première composante fonction de la bande passante disponible sur l'artère, et une autre composante fonction des ressources disponible sur l'artère ;

caractérisé en ce que la première composante est une fonction présentant une valeur nulle si la bande passante disponible est supérieure ou égale à la bande passante requise pour une communication, et une voleur égale à la différence entre la bande passante requise et la bande passante disponible si la bande passante disponible est inférieure à la bande passante requise.

Dans ce cas, la deuxième composante présente avantageusement une valeur constante ou-delà d'une quantité prédéterminée de ressources disponibles. Le procédé selon l'invention permet alors de limiter le nombre de calculs de routage, et de ne pas procéder à de nouveaux calculs de routage tant que la topologie du réseau ne change pas.

De préférence, la deuxième composante est une fonction présentant un nombre fini de valeurs possibles.

Dans un autre mode de mise en oeuvre, la deuxième composante est une fonction décroissante de la quantité de ressources disponibles.

De préférence, l'étape de choix s'effectue de sorte à minimiser le coût du routage, pour une relation d'ordre dans laquelle un premier vecteur est inférieur à un second vecteur si la première composante du premier vecteur est inférieure à la première composante du second vecteur, et en cas d'égalité des premières composantes, si la deuxième composante du premier vecteur est inférieure à la deuxième composante du deuxième vecteur.

Le vecteur somme d'un premier et d'un deuxième vecteurs est avantageusement défini comme le vecteur dont la première composante est égale à la plus petite des premières composantes des dits premier et second vecteurs, et dont la deuxième composante est égale à la somme des deuxièmes composantes des premier et second vecteurs.

Dans un mode de mise en oeuvre, l'étape de calcul des différentes routes s'effectue par application de l'algorithme de Dijkstra.

L'invention a aussi pour objet un dispositif pour la mise en oeuvre de ce procédé.

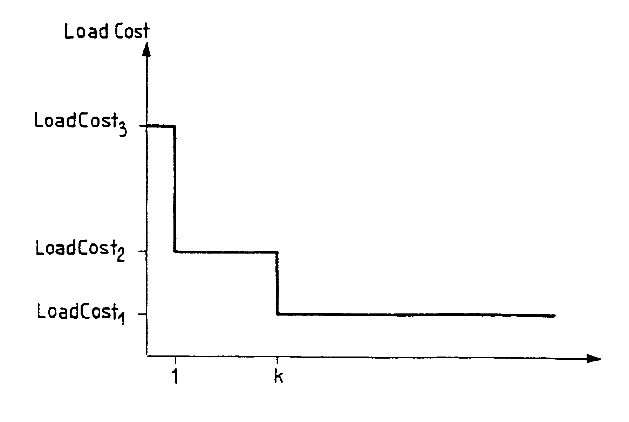

D'autres caradéristiques et avantages de l'invention apparaîtront à la lecture de la description qui suit de modes de réalisation de l'invention, donnée à titre d'exemple et en référence aux dessins annexés, dont la figure unique montre un graphe de la composante de charge du vecteur de coût selon un mode de réalisation de l'invention;

L'invention propose, dans un réseau de télécommunications, de prendre en compte la bande passante pour la définition du coût et le calcul des routages. Elle permet au réseau de garantir la bande passante requise, si elle est disponible, ou une bande passante plus grande, tout en minimisant le nombre de noeuds et d'artères que comprend le routage. Pour cela, l'invention propose de considérer une fonction de coût $\underline{Cost}$ présentant une forme vectorielle, i. e. présentant deux composantes indépendantes; ce vecteur de coût présente une composante qui est une fonction de la bande passante libre sur une artère, et une composante fonction de la charge de l'artère. Le vecteur de coût peut donc présenter la forme

$$\underline{Cost} := (BandCost; LoadCost)$$

La première composante BandCost est la composante fonction de la bande disponible sur l'artère. Elle permet de tenir compte pour le calcul d'un routage dans le réseau privé, non seulement de la charge des artères, mais aussi de la bande disponible sur l'artère. La définition de la première composante est expliquée plus en détail en référence à des exemples dans la suite de la description. La deuxième composante LoodCost est fonction de la charge de l'artère, et est décrite plus en détail dans la suite en référence à la figure.

Pour un routage possible d'un appel, le vecteur de coût est défini par itération, en sommant les vecteurs de coût définis sur chacune des artères et chacun des débordements constituant le routage envisagé. On définit donc uniquement le vecteur de coût entre deux noeuds , comme ci-dessus, ainsi que la fonction de somme des deux vecteurs.

Cette somme peut se définir comme suit:

$$\underline{Cost_1} + \underline{Cost_2} := (Min[BandCost_1; BandCost_2]; LoadCost_1 + LoadCost_2)$$

Autrement dit, lorsque l'on effectue la somme des vecteurs de coût sur deux artères, la première composante qui est la composante représentative de la bande passante est égale à la bande passante disponible sur le routage formé des deux artères. C'est donc la valeur inférieure des bandes passantes des deux artères, ce qui dans la formule ci-dessus est représenté par la fonction Min.

La deuxième composante d'un vecteur coût est représentative de la charge d'une artère. La deuxième composante de la somme de deux vecteurs coûts est égale à la somme des deuxièmes composantes des vecteurs sommés. Intuitivement, ceci se traduit par le fait qu'indépendamment de la bande passante, le coût pour emprunter un routage formé de deux artères est égal à la somme des coûts de ces deux artères.

La définition d'un tel vecteur coût pour une artère, et la définition d'une somme dans l'espace vectoriel correspondant permet d'affecter à chaque routage dans le réseau un coût. L'invention propose une relation d'ordre dons l'espace vectoriel des coûts, de sorte à pouvoir comparer des routages et définir un "meilleur" routage. Celle relation d'ordre est définie de la façon suivante:

$$\underline{\text{Cost}_1} \; < \; \underline{\text{Cost}_2}$$

si $BandCost_1 \neq BandCost_2$ et $BandCost_1 < BandCost_2$
ou si $BandCost_1 = BandCost_2$ et $LoadCost_1 < LoadCost_2$

La relation définie ainsi est bien une relation d'ordre; si un routage présente une bande inférieure à un autre routage, il présente un coût inférieur. A bande égale, le routage présentant le coût le plus faible est celui dont la composante représentative de la charge est la plus faible.

Ces définitions permettent un calcul des différents routages possibles, et une comparaison des différents routages pour en choisir un.

La valeur de la première composante peut varier en fonction des protocoles utilisés. On décrit maintenant un mode de réalisation de l'invention, adapté à des protocoles avec repli ou régression, comme par exemple X25. Dons ce cas, la première composante du vecteur de coût dépend du routage calculé; autrement dit, un calcul de routage est effectué entre un noeud d'origine et un noeud de destination, pour une valeur de bande passante requise $b_{requise}$. La première composante BandCost pour une artère donnée présentant une bande passante disponible $b_{dispo}$ est alors
$BandCost := 0$ si $b_{dispo} \geq b_{requise}$ et
$BandCost := b_{requise} - b_{dispo}$ si $b_{dispo} < b_{requise}$

Autrement dit, dans ce cas, la composante fonction de la bande passante disponible est nulle si la bande passante disponible est supérieure ou égale à la bonde passante requise pour le routage, et est égale ou repli si la bande passante disponible est inférieure à la bande passante requise pour le routage. L'application de la relation d'ordre définie plus haut conduit alors à chercher un routage présentant une bande passante supérieure ou égale à la bande requise, présentant un coût minimal.

Si la bande requise n'est pas disponible, on cherche à minimiser le repli, indépendamment du coût. Il est clair encore une fois qu'une modification de la relation d'ordre ou de la définition de la première composante fonction de la charge permet de changer les objectifs recherchés.

On peut utiliser l'algorithme de Dijkstra pour déterminer un routage de l'appel qui minimise le vecteur de coût défini plus haut, en tenant compte de la bande passante requise. L'algorithme de Dijkstra est décrit dans les ouvrages d'algorithmique, et est connu pour trouver, dans un graphe volué, un plus court chemin entre deux noeuds. Dans l'application de cet algorithme à la présente invention, les noeuds du graphe sont formés des noeuds du réseau. Les trajets entre les noeuds sont formés des artères du réseau privé, ou en cas de débordement possible, des débordements par un réseau externe. La distance est le vecteur de coût défini plus haut, et la relation d'ordre classique dans les réels est remplacée dans l'application de l'algorithme par la relation d'ordre définie elle aussi plus haut. On peut aussi utiliser pour le calcul des routages de l'invention des algorithmes analogues à l'algorithme de Dijkstra, qui permettent aussi de trouver un plus court chemin. On peut citer à titre d'exemple l'algorithme de Bellman ou l'algorithme de Floyd ; on notera que l'algorithme de Bellman ne s'applique que pour les graphes sans circuits.

L'invention propose encore de rendre plus rapide le calcul de plus court chemin dans l'algorithme de Dijkstro, ou dans un algorithme analogue, en ne parcourant pas les branches de l'arbre qui ne pourront pas conduire à une solution satisfaisante. L'algorithme de Dijkstra procède de la façon suivante: on considère un graphe G de N noeuds, qui est valué, i. e. dont chaque trajet existant entre deux noeuds $i$ et $j$ est affecté d'une valuation ou poids $l(i, j)$. On considère $s$ un noeud de départ du graphe G, $d$ un noeud d'arrivée, et on cherche un chemin minimisant $\pi(s, d)$, la distance de $s$ à $d$, i. e. la somme des valuations des arcs reliant $s$ à $d$. On note S le sous-graphe de G formé des noeuds $x$ pour lesquels on connaît le chemin minimal vers $s$, et $\tilde{S}$ son complémentaire. On note en outre $\Gamma_i$ l'ensemble des

noeuds voisins d'un noeud i donné.

Au départ, le sous-graphe S ne contient que le noeud s, et $\overline{S}$ contient l'ensemble des autres noeuds, affecté des valeurs initiales suivantes:

$\pi(s, i) = |(s, i)$ pour $i \in \Gamma_s$, le noeud parent étant s;
$\pi(s, d) = 8$, pour les autres noeuds, qui n'ont pas de noeud parent.

Une itération de l'algorithme s'effectue de la façon suivant.

Si $\overline{S}$ est vide, ou s'il ne contient que des noeuds i avec $\pi(s, i) = 8$, on a terminé.

Sinon, on considère le noeud n de $\overline{S}$ qui est le plus proche du noeud de départ, i. e. le noeud qui minimise $\pi(s, i)$, $i \in \overline{S}$ ; on prend ce noeud et on l'enlève de $\overline{S}$ pour le mettre dans S.

Ensuite, on considère les voisins de ce noeud n et on calcule

$$\pi(s, n) + l(n, j), j \in \Gamma_n \text{ et } j \in \overline{S};$$

Si cette quantité est inférieure à $\pi(s, j)$, on met à jour $\pi(s, i)$:

$$\pi(s, j) := \pi(s, n) + l(n, j)$$

et on met aussi à jour le noeud parent de j, qui devient n.

On procède à cette opération pour tous les noeuds de $\Gamma_n$, puis on réordonne $\overline{S}$.

De la sorte, on ajoute progressivement à S l'ensemble des noeuds du graphe, en procédant par longueur croissante des chemins. Si on recherche un chemin vers un noeud d donné, l'algorithme peut être interrompu avant la fin, dès lors que le noeud de destination a été ajouté dans le sous graphe S.

L'algorithme se démontre par l'absurde de la façon suivante. On considère n le noeud le plus proche de $\overline{S}$, qui doit être ajouté à S. S'il existe un chemin le plus proche, ce chemin part de s et arrive à n, et présente un premier noeud dans $\overline{S}$, noté m. On a alors

$$\pi(s, m) + \pi(m, n) < \pi(s, n)$$

et puisque $\pi(m, n)$ est positif ou nul,

$$\pi(s, m) < \pi(s, n)$$

ce qui est contraire à l'hypothèse. Il est dair par ailleurs que $\pi(s, m)$ a été calculé dans une itération précédente, lors de l'ajout dans S du parent de m.

Selon l'invention, lors d'une itération de l'algorithme, lorsque l'on considère les noeuds voisins du noeud n le plus proche du noeud source que l'on vient de retirer de $\overline{S}$, le noeud , on peut ne pas considérer les artères pour lesquelles la première composante de coût est infinie. En d'autres termes, il est inutile de parcourir les branches de l'arbre pour lesquelles on sait que le résultat obtenu ne sera pas un routage acceptable du point de vue du protocole. On limite ainsi la durée des calculs pour l'algorithme.

L'invention propose aussi de définir la fonction de coût de sorte à minimiser le nombre et la fréquence des calculs de routage. Pour cela l'invention propose qu'au moins une des composantes du vecteur de coût présente des valeurs discrètes - autrement dit, que cette composante présente un nombre fini de valeurs possibles -. La figure montre une allure possible de la deuxième composante LoadCost, qui est fonction de la charge d'une artère du réseau; en ordonnées est portée la composante LoadCost. En abscisses figurent les ressources disponibles - par exemple pour le cas d'un réseau de type RNIS, dans lequel l'artère est formée d'une pluralité d'accès T0 ou T2, les ressources disponibles correspondent au nombre de canaux B libres.

La figure montre essentiellement que la deuxième composante est une fonction croissante de la charge, ou, de façon strictement équivalente, une fonction décroissante des ressources disponibles sur l'artère. Cette fonction présente une valeur constante en deçà d'une valeur donnée de la charge, ou, de façon équivalente, présente une valeur constante au-delà d'une certaine valeur de ressources disponibles.

Dans l'exemple, la charge présente une valeur infinie - i.e. une valeur supérieure à toute autre - si l'artère est coupée. Elle présente une valeur "saturée" si aucun canal n'est disponible; cette valeur "saturée" est choisie de sorte à être supérieure à la somme de tous les coûts possibles d'un routage par des canaux B. Elle présente une première valeur $LoadCost_3$ si un seul canal est disponible, une deuxième voleur LoadCost2 si de 2 à k canaux sont disponibles, k étant un entier, et une valeur $LoadCost_1 = 1$ si plus de k canaux sont disponibles, avec $LoadCost_2 > LoadCost_1$. Une valeur de k de l'ordre de 10 est appropriée; le choix d'une valeur de k relativement faible permet d'éviter de recalculer les routages, tant que le coût ne varie pas. D'autres valeurs sont possibles, notamment en fonction de la capacité d'une artère et du nombre de canaux occupés par une communication. Le choix des valeurs $LoadCost_i$, du nombre de valeurs $LoadCost_i$, comme le choix des valeurs de charge pour lesquelles la fonction change de valeurs dépend de la nature du réseau, et de la répartition de charge qui est souhaitée. Ces valeurs peuvent être des valeurs absolues - comme dans l'exemple - ou elles peuvent être fonction de la capacité totale de l'artère.

On pourrait aussi définir les différentes valeurs $LoadCost_i$ de la façon suivante:

$$LoadCost_i = (N-1).LoadCost_{i-1} + 1$$

avec N le nombre de noeuds, et $LoadCost_1 = 1$.

Ce choix permet une répartition uniforme des communications sur les différents routages.

Le choix selon l'invention d'un coût qui est une fonction des ressources disponibles sur les artères, et non pas comme dans l'art antérieur des ressources requises, permet de limiter considérablement le nombre et la fréquence des calculs de routage. Si l'on considère l'exemple d'une valeur de k valant 10, comme décrit plus haut, on évite tout recalcul de routage tant que les artères du réseau présentent au moins dix canaux libres. On évite donc toute répétition des calculs de routage entre les mêmes noeuds d'origine et de destination tant que le réseau est faiblement chargé. En comparaison, l'art antérieur propose de recalculer un routage pour chaque demande d'établissement de communication. On comprend donc l'intérêt que la fonction définie en référence à la figure présente une valeur constante dès que les ressources disponibles sur l'artère dépassent une valeur donnée.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux que les réseaux privés mentionnés dans la description. Il est aussi clair que l'invention n'est pas limitée aux modes de réalisation décrits. On peut choisir des définitions différentes des composantes du vecteur de coût et de la relation d'ordre, en fonction des contraintes du réseau dans lequel l'invention est appliquée.

## Revendications

1. Procédé de routage d'une communication dans un réseau avec une pluralité de noeuds reliés par des artères, comprenant le calcul du coût de différentes routes pour acheminer la communication, et le choix d'une route en fonction du coût, dans lequel le coût d'une route est fonction :

   - de la bande passante disponible sur les artères constituant la route ;
   - des ressources disponibles sur les dites artères ;
   - de la somme des coûts des artères constituant la route,
   - et de la bande passante requise pour cette communication;

   le coût d'une artère étant un vecteur présentant: une première composante fonction de la bande passante disponible sur l'artère, et une autre composante fonction des ressources disponible sur l'artère ;

**caractérisé en ce que** la première composante est une fonction présentant une valeur nulle si la bande passante disponible est supérieure ou égale à la bande passante requise pour une communication, et une valeur égale à la différence entre la bande passante requise et la bande passante disponible si la bande passante disponible est inférieure à la bande passante requise.

2. Procédé selon la revendication 1, **caractérisé en ce que** la deuxième composante présente une valeur constante au-delà d'une quantité prédéterminée de ressources disponibles.

3. Procédé selon la revendication 1, **caractérisé en ce que** la deuxième composante est une fonction présentant un nombre fini de valeurs possibles.

4. Procédé selon la revendication 1, **caractérisé en ce que** la deuxième composante est une fonction décroissante de la quantité de ressources disponibles.

5. Procédé selon l'une des revendications 1 à 4, **caractérisé en ce que** l'étape de choix d'une route s'effectue de sorte à minimiser le coût du routage, pour une relation d'ordre dans laquelle un premier vecteur est inférieur à un second vecteur si la première composante du premier vecteur est inférieure à la première composante du second vecteur, et en cas d'égalité des premières composantes, si la deuxième composante du premier vecteur est inférieure à la deuxième composante du deuxième vecteur.

6. Procédé selon l'une des revendications 1 à 5, **caractérisé en ce que** le vecteur somme d'un premier et d'un deuxième vecteurs est défini comme le vecteur dont la première composante est égale à la plus petite des premières composantes des dits premier et second vecteurs, et dont la deuxième composante est égale à la somme des deuxièmes composantes des premier et second vecteurs.

7. Procédé selon l'une des revendications 1 à 6, **caractérisé en ce que** l'étape de calcul des différentes routes s'effectue par application de l'algorithme de Dijkstra.

8. **Dispositif** de routage d'une communication dans un réseau avec une pluralité de noeuds reliés par des artères, comprenant des moyens pour calculer le coût de différentes routes pour acheminer la communication, et pour choisir une route en fonction du coût, le coût d'une route étant fonction :

   - de la bonde passante disponible sur les artères constituant la route ;
   - des ressources disponibles sur les dites artères ;
   - de la somme des coûts des artères constituant la route ;
   - et de la bande passante requise pour cette communication ;

   le coût d'une artère étant un vecteur présentant: une première composante fonction de la bande passante disponible sur l'artère, et une autre composante fonction des ressources disponibles sur l'artère ;
   **caractérisé en ce qu'**il comporte des moyens pour calculer la première composante selon une fonction présentant une valeur nulle si la bande passante disponible est supérieure ou égale à la bande passante requise pour une communication, et une valeur égale à la différence entre la bande passante requise et la bande passante disponible si la bande passante disponible est inférieure à la bande passante requise.

9. Dispositif selon la revendication 8, **caractérisé en ce qu'**il comporte des moyens pour calculer une deuxième composante présentant une voleur constante au-delà d'une quantité prédéterminée de ressources disponibles.

10. Dispositif selon la revendication 8, **caractérisé en ce qu'**il comporte des moyens pour calculer une deuxième composante selon une fonction présentant un nombre fini de valeurs possibles.

11. Dispositif selon la revendication 8, **caractérisé en ce qu'**il comporte des moyens pour calculer une deuxième composante selon une fonction décroissante de la quantité de ressources disponibles.

12. Dispositif selon l'une des revendications 8 à 11, **caractérisé en ce que** les moyens pour choisir une route comportent des moyens pour minimiser le coût du routage, pour une relation d'ordre dans laquelle un premier vecteur est inférieur à un second vecteur si la première composante du premier vecteur est inférieure à la première composante du second vecteur, et en cas d'égalité des premières composantes, si la deuxième composante du premier vecteur est inférieure à la deuxième composante du deuxième vecteur.

**13.** Dispositif selon l'une des revendications 8 à 12, **caractérisé en ce qu'**il comporte des moyens pour calculer le vecteur somme d'un premier et d'un deuxième en constituant un vecteur dont la première composante est égale à la plus petite des premières composantes des dits premier et second vecteurs, et dont la deuxième composante est égale à la somme des deuxièmes composantes des premier et second vecteurs.

**14.** Dispositif selon l'une des revendications 8 à 13, **caractérisé en ce que**, pour calculer différentes routes, il comporte des moyens pour appliquer l'algorithme de Dijkstra.

**Claims**

**1.** A method of routing a call in a network having a plurality of nodes interconnected by trunks, the method comprising calculating the costs of different routes for taking the call, with selection between routes being a function of cost, where the cost of a route is a function:

- of the passband available on the trunks constituting the route;
- of the resources available on said trunks;
- of the sum of the costs of the trunks constituting the route; and
- of the bandwidth required for the call;

the cost of a trunk being a vector having a first component which is a function of the bandwidth available on the trunk and another component which is a function of the resources available on the trunk;
the method being **characterized in that** the first component is a function having the value zero if the available bandwidth is greater than or equal to the bandwidth required for a call, and a value equal to the difference between the bandwidth required and the bandwidth available if the bandwidth available is less than the bandwidth required.

**2.** A method according to claim 1, **characterized in that** the second component has a value that is constant for available resources that are above a predetermined quantity.

**3.** A method according to claim 1, **characterized in that** the second component is a function that has a finite number of possible values.

**4.** A method according to claim 1, **characterized in that** the second component is a decreasing function of the quantity of resources available.

**5.** A method according to any one of claims 1 to 4, **characterized in that** the step of selecting a route is performed in such a manner as to minimize the cost of the routing for an ordering relationship in which a first vector is less than a second vector if the first component of the first vector is less than the first component of the second vector, and if said first components are equal, the second component of the first vector is less than the second component of the second vector.

**6.** A method according to any one of claims 1 to 5, **characterized in that** the vector sum of first and second vectors is defined as the vector whose first component is equal to the smaller of the first components of said first and second vectors, and whose second component is equal to the sum of the second components of the first and second vectors.

**7.** A method according to any one of claims 1 to 6, **characterized in that** the step of calculating the various routes is performed by applying Dijkstra's algorithm.

**8.** Apparatus for routing a call in a network having a plurality of nodes interconnected by trunks, the apparatus comprising means for calculating the costs of various routes for taking the call, and for selecting one particular route as a function of cost, the cost of a route being a function:

· of the bandwidth available on the trunks constituting the route;
· of the resources available on said trunks;
· of the sum of the costs of the trunks constituting the route; and
· of passband required for the call;

the cost of a trunk being a vector having a first component which is a function of the passband available on the trunk and another component which is a function of the resources available on the trunk;
the apparatus being **characterized in that** it includes means for calculating the first component by means of a function having a value zero if the available bandwidth is greater than or equal to the bandwidth required for a call, and a value equal to the difference between the bandwidth required and the available bandwidth if the available bandwidth is less than the bandwidth required.

9. Apparatus according to claim 8, **characterized in that** it includes means for calculating a second component having a value that is constant for available resources that are above some predetermined quantity.

10. Apparatus according to claim 8, **characterized in that** it includes means for calculating a second component by means of a function that has a finite number of possible values.

11. Apparatus according to claim 8, **characterized in that** it includes means for calculating a second component by means of a decreasing function of the quantity of resources available.

12. Apparatus according to any one of claims 8 to 11, **characterized in that** the means for selecting a route include means for minimizing the cost of the routing using an ordering relationship in which a first vector is less than a second vector if the first component of the first vector is less than the first component of the second vector, and if the first components are equal, if the second components of the first vector is less than the second component of the second vector.

13. Apparatus according to any one of claims 8 to 12, **characterized in that** it includes means for calculating the vector sum of a first vector and a second vector by constituting a vector whose first component is equal to the smaller of the first components of said first and second vectors, and whose second component is equal to the sum of the second components of the first and second vectors.

14. Apparatus according to any one of claims 8 to 13, **characterized in that**, to calculate different routes, it includes means for applying Dijkstra's algorithm.

## Patentansprüche

1. Verfahren zur Leitweglenkung einer Verbindung in einem Netz mit einer Vielzahl an Knoten, die über Leitwege miteinander verbunden sind, das die Kostenberechnung der verschiedenen Strecken zur Übermittlung der Verbindung und die Auswahl einer Strecke in Abhängigkeit von den Kosten umfasst, wobei die Kosten für eine Strecke abhängig sind von:

   - der in den Leitwegen, aus denen die Strecke besteht, verfügbaren Bandbreite;
   - der Summe der Kosten für die Leitwege, aus denen die Strecke besteht;
   - und der für diese Verbindung erforderlichen Bandbreite;

   wobei die Kosten für einen Leitweg einen Vektor darstellen, der sich wie folgt zusammensetzt: aus einer ersten Komponente, die von der im Leitweg verfügbaren Bandbreite abhängig ist, und einer weiteren Komponente, die von den im Leitweg verfügbaren Ressourcen abhängig ist;
   **dadurch gekennzeichnet, dass** die erste Komponente eine Funktion ist, die den Wert Null aufweist, wenn die verfügbare Bandbreite über oder gleich der Bandbreite liegt, die für eine Verbindung erforderlich ist, und die einen Wert gleich der Differenz zwischen der erforderlichen Bandbreite und der verfügbaren Bandbreite aufweist, wenn die verfügbare Bandbreite unter der erforderlichen Bandbreite liegt.

2. Verfahren gemäß Anspruch 1, **dadurch gekennzeichnet, dass** die zweite Komponente einen konstanten Wert über einer vordefinierten Anzahl an verfügbaren Ressourcen aufweist.

3. Verfahren gemäß Anspruch 1, **dadurch gekennzeichnet, dass** die zweite Komponente eine Funktion darstellt, die eine endliche Anzahl an möglichen Werten aufweist.

4. Verfahren gemäß Anspruch 1, **dadurch gekennzeichnet, dass** die zweite Komponente eine abnehmende Funktion der Anzahl an verfügbaren Ressourcen darstellt.

**5.** Verfahren gemäß einem der Ansprüche 1 bis 4, **dadurch gekennzeichnet, dass** der Schritt zur Auswahl einer Strecke dergestalt durchgeführt wird, dass die Kosten der Leitweglenkung minimiert werden, und zwar für eine Ordnungsrelation, in der ein erster Vektor kleiner ist als ein zweiter Vektor, wenn die erste Komponente des ersten Vektors kleiner ist als die erste Komponente der zweiten Vektors, und im Fall der Gleichheit der ersten Komponenten, wenn die zweite Komponente des ersten Vektors kleiner ist als die zweite Komponente des zweiten Vektors.

**6.** Verfahren gemäß einem der Ansprüche 1 bis 5, **dadurch gekennzeichnet, dass** der Vektor, der die Summe aus dem ersten und zweiten Vektor darstellt, definiert wird als der Vektor, dessen erste Komponente gleich der kleineren der ersten Komponenten des genannten ersten und zweiten Vektors ist, und dessen zweite Komponente gleich der Summe der zweiten Komponenten des ersten und zweiten Vektors ist.

**7.** Verfahren gemäß einem der Ansprüche 1 bis 6, **dadurch gekennzeichnet, dass** der Schritt zur Berechnung der verschiedenen Strecken in Anwendung des Dijkstra-Algorithmus erfolgt.

**8.** Vorrichtung zur Leitweglenkung einer Verbindung in einem Netz mit einer Vielzahl an Knoten, die durch Leitwege miteinander verbunden sind, bestehend aus Mitteln zur Berechnung der Kosten für die verschiedenen Strecken zur Übermittlung der Verbindung und zur Auswahl einer Strecke in Abhängigkeit von den Kosten, wobei die Kosten einer Strecke abhängig sind von:

- der verfügbaren Bandbreite in den Leitwegen, aus denen die Strecke besteht;
- den in den genannten Leitwegen verfügbaren Ressourcen;
- der Summe der Kosten für die Leitwege, aus denen die Strecke besteht;
- und der für diese Verbindung erforderlichen Bandbreite;

wobei die Kosten für einen Leitweg einen Vektor darstellen, der sich wie folgt zusammensetzt: aus einer ersten Komponente, die von der im Leitweg verfügbaren Bandbreite abhängig ist, und einer weiteren Komponente, die von den im Leitweg verfügbaren Ressourcen abhängig ist; **dadurch gekennzeichnet, dass** sie Mittel zur Berechnung der ersten Komponente anhand einer Funktion umfasst, die den Wert Null aufweist, wenn die verfügbare Bandbreite über oder gleich der Bandbreite liegt, die für eine Verbindung erforderlich ist, und die einen Wert gleich der Differenz zwischen der erforderlichen Bandbreite und der verfügbaren Bandbreite aufweist, wenn die verfügbare Bandbreite unter der erforderlichen Bandbreite liegt.

**9.** Vorrichtung gemäß Anspruch 8, **dadurch gekennzeichnet, dass** sie Mittel zur Berechnung einer zweiten Komponente umfasst, die oberhalb einer vordefinierten Anzahl an verfügbaren Ressourcen einen konstanten Wert aufweist.

**10.** Vorrichtung gemäß Anspruch 8, **dadurch gekennzeichnet, dass** sie Mittel zur Berechnung einer zweiten Komponente entsprechend einer Funktion umfasst, die eine endliche Anzahl an möglichen Werten aufweist.

**11.** Vorrichtung gemäß Anspruch 8, **dadurch gekennzeichnet, dass** sie Mittel zur Berechnung einer zweiten Komponente entsprechend einer abnehmenden Funktion für die Anzahl an verfügbaren Ressourcen umfasst.

**12.** Vorrichtung gemäß einem der Ansprüche 8 bis 11, **dadurch gekennzeichnet, dass** die Mittel zur Auswahl einer Strecke Mittel umfassen, um die Kosten für die Leitweglenkung zu minimieren, und zwar in einer Ordnungsrelation, in der ein erster Vektor kleiner ist als ein zweiter Vektor, wenn die erste Komponente des ersten Vektors kleiner ist als die erste Komponente des zweiten Vektors, und im Fall der Gleichheit der ersten Komponenten, wenn die zweite Komponente des ersten Vektors kleiner ist als die zweite Komponente des zweiten Vektors.

**13.** Vorrichtung gemäß einem der Ansprüche 8 bis 12, **dadurch gekennzeichnet, dass** sie Mittel zur Berechnung des Vektors als Summe eines ersten und zweiten Vektors umfasst, indem sie einen Vektor bildet, dessen erste Komponente gleich der kleineren der ersten Komponenten des genannten ersten und zweiten Vektors ist und dessen zweite Komponente gleich der Summe der zweiten Komponenten des ersten und zweiten Vektors ist.

**14.** Vorrichtung gemäß einem der Ansprüche 8 bis 13, **dadurch gekennzeichnet, dass** sie zur Berechnung verschiedener Strecken Mittel zur Anwendung des Dijkstra-Algorithmus umfasst.

Load Cost

LoadCost$_3$

LoadCost$_2$

LoadCost$_1$

1     k